Europäisches Patentamt

European Patent Office

Office européen des brevets

(19)

(11) Veröffentlichungsnummer: **0 240 655 B1**

(12) # EUROPÄISCHE PATENTSCHRIFT

(45) Veröffentlichungstag der Patentschrift: **08.05.91**

(51) Int. Cl.5: **A01C 17/00, A01C 21/00**

(21) Anmeldenummer: **87100963.5**

(22) Anmeldetag: **23.01.87**

Teilanmeldung 90100984.5 eingereicht am 23/01/87.

(54) **Verfahren zur Bestimmung der Arbeitsbreite und der Streudichte bei Schleuderstreuern.**

(30) Priorität: **13.02.86 DE 3604449**
**10.05.86 DE 3615817**

(43) Veröffentlichungstag der Anmeldung:
**14.10.87 Patentblatt 87/42**

(45) Bekanntmachung des Hinweises auf die
Patenterteilung:
**08.05.91 Patentblatt 91/19**

(84) Benannte Vertragsstaaten:
**DE**

(56) Entgegenhaltungen:
**DD-A- 211 051**
**DD-A- 214 988**
**DE-A- 1 457 844**
**US-A- 4 491 023**

(73) Patentinhaber: **Amazonen-Werke H. Dreyer GmbH & Co. KG**
**Am Amazonenwerk 9-13**
**W-4507 Hasbergen-Gaste(DE)**

(72) Erfinder: **Dreyer, Heinz, Dr. Dipl.-Ing. Univ. agr.**
**Am Amazonenwerk 7**
**W-4507 Hasbergen(DE)**

## Beschreibung

Die Erfindung betrifft ein Meßverfahren gemäß des Oberbegriffes des Patentanspruches 1.

Ein derartiges Meßverfahren ist durch die ISO-Norm 5690/1 bzw. in der Broschüre "Spredning of handels gødning" Seite 8 bekannt geworden. Bei diesem Meßverfahren werden quer zur Fahrtrichtung des Schleuderstreuers nebeneinander Auffangbehälter in einer Breite aufgestellt, die etwa der Wurfweite der abgeschleuderten Düngemittelpartikel betrifft. Anschließend fährt der Landwirt mit dem Schleuderstreuer über diese Auffangbehälter hinweg, so daß über die gesamte Wurfbreite, über die die Düngemittelpartikel vom Schleuderstreuer abgeschleudert sind, die Düngemittelpartikel aufgefangen werden. Anschließend muß jede einzelne Düngermenge, die in jedem Auffangbehälter aufgefangen worden ist, einzeln abgewogen und in eine Tabelle oder in ein Streudiagramm eingetragen werden und dann muß das Streubild aufgrund dieser ermittelten Werte in langwieriger Arbeit ermittelt werden. Es ist jedoch auch möglich, bei diesem bekannten Meßverfahren im vorgesehenen Arbeitsbreitenabstand noch einmal zurückzufahren über diese Auffangbehälter, so daß auch gleich das überlappte Streubild bzw. die Streumenge beim überlappten Streubild in den Auffangbehältern aufgefangen werden kann. Es ist jedoch in jedem Falle erforderlich, daß eine erhebliche Anzahl von Streubehältern äußerst exakt aufgestellt werden muß, und daß in äußerst langwieriger Weise die in jedem Behälter aufgefangene Düngermenge einzeln ausgewogen und in eine Tabelle eingetragen werden muß, um so beurteilen zu können, ob das Streubild in sich gleichmäßig und die Streustärke gleich ist, so daß der Dünger gleichmäßig über die gesamte Arbeitsbreite auf dem Boden bzw. auf dem Acker ausgebracht werden kann.

Dieses Meßverfahren ist sehr aufwendig und äußerst unpraktikabel, so daß die Landwirte dieses bekannte Meßverfahren nicht anwenden. Bei dem Meßverfahren muß der Acker oder die Wiese völlig eben sein, um genaue bzw. ausreichend genaue Meßwerte zu erhalten. Dieses ist in der Praxis nicht gegeben. Daher wird es selbst von Instituten und Beratern nicht gerne angewendet. In der Praxis beim Landwirt hat es überhaupt keine Bedeutung. Bisher verläßt der Landwirt sich ganz auf die Angaben in der Streutabelle. Da selbst innerhalb einer Düngersorte von Charge zu Charge Unterschiede sind, so daß man durchaus davon sprechen kann, daß die Dünger unterschiedliche, ja sogar gegensätzliche Streueigenschaften haben, entstehen sehr große Streufehler, die der Landwirt, da die bisherigen Meßverfahren für den Landwirt unpraktikabel sind, nicht erkennt.

Desweiteren ist durch die DD-PS 211 051 ein ähnliches Meßverfahren bekannt. Bei diesem Meßverfahren werden auf der zu bestreuenden Bodenoberfläche Auffangschalen mit untereinander verschiedenen Abständen quer und längs zur Fahrtrichtung des Streuers den typischen Meßpunkten angeordnet. Nach der Überfahrt des Streuers und Applikation der Düngerpartikel kann der Inhalt der Auffangschalen ermittelt werden und das Streufeld soll mit ausreichender Genauigkeit bestimmbar sein. Es soll auch eine schnelle Bestimmung der Streukurve und der Prüfung und Einstellung von Mineraldünger möglich sein. Wie diese Prüfung und Einstellung im einzelnen durchgeführt wird oder durchgeführt werden muß, ist in dieser Druckschrift nicht beschrieben.

Es sind nun bereits Vorschläge gemacht worden, um dem Landwirt mit einfach erscheindenden Mitteln Hilfsmittel an die Hand zu geben, um die Lage des Streufächers sowie die Wurfweite zu ermitteln. Diese Hilfsmittel führen jedoch nicht zum gewünschten Ziel. So ist durch die deutsche Auslegeschrift 14 57 863 ein Meßverfahren bekannt geworden, mit welchem die gleichmäßige Lage des von dem abgeworfenen Material, bestrichenen Streufächers überwacht werden kann. Dieses Meßverfahren ist nicht geeignet zur Bestimmung der Arbeitsbreite und der Streudichte bei Schleuderstreuern.

Ein weiteres Meßverfahren ist durch die deutsche Patentschrift 30 33 666 bekannt geworden. Bei diesem Streuverfahren sind innerhalb des Streubereiches in einem äußerst kurzen Abstand von der Maschine über ein Gestänge an der Maschine Sensoren angeordnet, mit deren Hilfe die Wurfweite auf unterschiedliche Werte eingestellt werden soll. Hierdurch kann der vertikale Abwurfwinkel des Streugutes festgestellt und der Schleuderstreuer nach der Maßgabe dieser Meßwerte eingestellt werden. Hierdurch soll die Wurfweite zu bestimmen sein.

Nachteilig ist jedoch bei diesem bekannten Meßverfahren, daß sich die Wurfweiten zwar theoretisch ermitteln bzw. berechnen läßt, aber die tatsächliche Wurfweite, wie weit die abgeschleuderten Düngemittelpartikel geworfen werden, nicht ermittelt werden kann, da die Einflußgrößen, die auf die abgeschleuderten Düngemittelpartikel während ihrer Flugbahn einwirken, unberücksichtigt bleiben. Des weiteren läßt dieses bekannte Meßverfahren auch die tatsächliche Abwurfgeschwindigkeit bei unterschiedlichen Düngersorten bzw. bei Düngern mit unterschiedlichen Oberflächen unberücksichtigt. Weiterhin ist es mit diesem Meßverfahren nicht möglich auf jede Düngersorte das Streugerät einzustellen, so daß die tatsächlichen Wurfweiten ermittelt werden können und es ist auch nicht möglich, den Düngerstreuer so einzustellen, daß mit Sicherheit der Dünger in einer gleichmäßigen Streustärke auf dem Boden ausgestreut wird. Die tatsächliche Streustärke des ausgebrachten Düngers läßt sich mit diesem Meßverfahren nicht ermitteln.

Darüber hinaus ist dieses bekannte Meßverfahren hinsichtlich der technischen Realisierung äußerst aufwendig.

Beim Düngerstreuen liegt nämlich die Problematik darin, daß die gleiche Düngersorte äußerst unterschiedlich beschaffen sein kann und zwar differieren u.a. die Korngröße, die Oberflächenbeschaffenheit (glatte oder stumpfe Körner), spezifisches Gewicht, Kornform, hygroskopische Eigenschaften. Hieraus ergibt sich dann, da bei ein und derselben Düngersorte mit ein und derselben Einstellung der Maschine der Dünger zwar jeweils mit dem gleichen Winkel zur Senkrechten, aber äußerst unterschiedlich weit abgeschleudert wird, so daß sich sehr große Streufehler ergeben, was als sog. Streifenbildung bezeichnet wird. So daß auch das Meßverfahren der DE-PS 30 33 666 nicht geeignet ist, die Streustärke, in der der Dünger ausgebracht wird, zu messen.

Der Erfindung liegt die Aufgabe zugrunde, ein Meßverfahren und eine zur Durchführung des Meßverfahrens vorgesehene einfache und einfach zu handhabende Meßvorrichtung zu schaffen, so daß auf einfachste Weise der Landwirt die Arbeitsbreite, die er anhand von Streutabellen eingestellt hat, bei jedem überprüfen kann, um so unabhängig bzw. unter Ausschaltung vor allem der unterschiedlichen Beschaffenheit der gleichen Düngersorte mit der vorgesehenen Arbeitsbreite und einer gleichmäßigen Streudichte den Boden oder die Pflanzen mit Dünger bestreuen zu können. Selbstverständlich gelten die vorstehenden Ausführungen auch für andere auszustreuende Materialien, wie Herbizide etc. Eine Überprüfung der Arbeitsbreite ist mit den bekannten Methoden bei der Spätdüngung nicht möglich.

Diese Aufgabe wird erfindungsgemäß durch das Kennzeichen des Patentanspruches 1 gelöst.

Aufgrund dieser Maßnahmen wird dem Landwirt in überraschend einfacher Weise ein Verfahren zum Überprüfen der Einstellung von Schleuderstreuern auf die gewünschte Arbeitsbreite mit der gewünschten gleichmäßigen Streudichte quer zur Fahrtrichtung bei unterschiedlichsten Düngern auch innerhalb einer Düngersorte an die Hand gegeben. Der Landwirt kann dieses Meßverfahren selbst auf dem Feld in einfachster Weise äußerst kostengünstig durchführen.

Die Erfindung geht jetzt einen ganz neuen Weg. Bislang stellte der Landwirt anhand der Streutabelle, die seinem Schleuderdüngerstreuer beigegeben ist, anhand der in der Streutabelle vorhandenen Düngerbezeichnungen und Korngrößenbildern seine Arbeitsbreite für seinen auszubringenden Dünger ein. Er mußte jedoch bisher darauf vertrauen, daß der der Streutabelle zugrunde liegende Dünger auch mit seinem auszustreuenden Dünger übreinstimmt und somit die in der Streutabelle angegeben Streu- und Arbeitsbreiten tatsächlich einer gleichmäßigen Streustärke erreicht wurden. In den meisten Fällen ist dieses jedoch tatsächlich nicht der Fall. Durch die Erfindung kann der Landwirt nun in überraschend einfacher Weise überprüfen, ob bei seinem Schleuderstreuer mit der von ihm nach der Streutabelle vorgenommenen Einstellung auch bei dem Dünger, den er ausbringen will, die tatsächliche Arbeitsbreite mit einer gleichmäßigen Streustärke erreicht. Hierzu wird der vom Schleuderstreuer abgeschleuderte Dünger an einigen Stellen aufgefangen und diese an einer vorbestimmten Stelle aufgefangene Düngermenge ist dann mit der in der Streutabelle angegebenen Sollwertmenge zu vergleichen. Sobald Sollwert und Meßwert übereinstimmen bedeutet dies, daß mit der eingestellten Stellung des Schleuderstreuers der Dünger in gewünschter Weise gleichmäßig über die gesamte Arbeitsbreite auf dem Acker ausgebracht wird. Das überraschende an der erfindungsgemäßen Lösung ist, daß man tatsächlich, wenn man diesen festgelegten und registrierten Meßpunkt (Abstand von Arbeitsbreitenmitte bzw. Mitte des Schleuderstreuers) und den Vergleichswert bei der Erstellung der Streutabelle und der Ermittlung der Einstellung des Schleuderstreuers für die verschiedenen Düngersorten und verschiedenen Arbeitsbreiten auf dem Streustand (wie beispielsweise durch den Prospekt "Amazone Prüfhalle" bekannt) ermittelt und mit dem an dem gleichen Meßstand (also gleicher Abstand von der Mitte des Schleuderstreuers) ermittelten Düngermengenwert bei der Überprüfung durch den Landwirt miteinander vergleicht, in einfacher Weise sehen kann, ob die Arbeitsbreite und die Streustärke stimmt. Die Ermittlung dieses repräsentativen Meßwertes geschieht mehr oder weniger beiläufig, da man zusätzlich nur die Düngermenge an der Meßstelle, die in einem vorbestimmten Abstand von der Mitte der Arbeitsbreite liegt, gesondert festhalten muß. Man bekommt also ohne zusätzlichen Aufwand diesen Meßwert bei der Erstellung des Streubildes automatisch mitgeliefert. Man muß ihn nur registrieren. Mit dem erfindungsgemäßen Meßverfahren kann der Landwirt erstmalig in wirklich praxisgerechter und äußerst einfacher Weise die richtige Arbeitsbreite seines Schleuderdüngerstreuers mit einer gleichmäßigen Streustärke kontrollieren und danach den Schleuderstreuer auf alle Einflußgrößen die irgendwie auf den Dünger während des Abwerfens und auf seiner Flugbahn bis zum Auftreffen auf dem Boden einwirken, berücksichtigen. Ist der vom Landwirt ermittelte Meßwert gleich dem repräsentativen Meßwert, so ist die Arbeitsbreite richtig eingestellt und die Streustärke ist über die gesamte Arbeitsbreite gleichmäßig. Ist der vom Landwirt ermittelte Meßwert zu klein, so ist die Arbeitsbreite zu klein, oder zu groß eingestellt.

Voraussetzung zur Anwendung dieses einfachen Meßverfahrens ist, daß der Landwirt, vorher zunächst wie bisher die tatsächlich eingestellte Ausbringmenge pro Flächeneinheit durch eine bekannte Abdrehprobe (bzw. wie durch die DE-PS 28 35 011 bekannt) in einfachster Weise ermittelt.

Dadurch, daß die Meßvorrichtungen an dem Schnittpunkt der Überlappung nebeneinanderliegender Streubereiche bzw. am Ende der Arbeitsbreite angeordnet sind, wird an einem neuralgischen Punkt des Streubereiches die tatsächliche Streustärke in überraschend einfacher Weise gemessen bzw. kontrolliert, da vor allem der Überlappungsbereich den an gibt, ob die Streustärke über die gesamte Arbeitsbreite gleichmäßig ist. Hierbei kann sogar unverzüglich die tatsächliche Streustärke in kg/ha ermittelt werden, wenn bei zwei nebeneinanderliegenden Streubahnen in Hin- und Herfahrt an dem Meßpunkt die Düngermenge in den Auffangbehältern mit einer definierten Auffangfläche aufgefangen werden. Der Auffangwert muß nur mit einem einfachen Multiplikator multipliziert werden. Auch können in der Streutabelle Vergleichstabellen aufgeführt sein, so daß der Landwirt überhaupt keine Umrechnungen machen muß.

Dadurch, daß die repräsentativen Werte auf einem Streuprüfstand im Zusammenhang mit der Erstellung eines gleichmäßigen Streubildes ermittelt und zusätzlich zu den Meßwerten in die Streutabelle eingefügt werden, wird der repräsentative Wert automatisch jeweils bei der Erstellung des Streubildes ermittelt, es ist keine zusätzliche Ermittlung dieses repräsentativen Wertes in einem besonderen Streuvorgang erforderlich. Darüber hinaus steht der repräsentative Wert an einer Stelle der Arbeitsbreite in einem direkten Zusammenhang mit dem zugehörigen gleichmäßigen Streubild, so daß der repräsentative Meßwert eine wirkliche Aussagekraft über die Gleichmäßigkeit des Streubildes über die gesamte Arbeitsbreite machen kann. Der Landwirt kann also seine ermittelte Düngermenge an dem Meßpunkt ohne Umrechnung mit den in der Streutabelle abgedruckten Werten vergleichen.

Um Ungenauigkeiten bei der Ermittlung der richtigen Arbeitsbreite auf dem Feld durch den Landwirt auszuschalten bzw. Unebenheiten auf der Teststrecke auszugleichen, ist erfindungsgemäß vorgesehen, daß in Fahrtrichtung des Schleuderstreuers gesehen mehrere Meßvorrichtungen hintereinanderliegend vorgesehen sind. Hierdurch werden evtl. auftretende Fehler bei der Ermittlung des Meßwertes auf dem Feld durch Schwankungen des Schleuderstreuers ausgeglichen. Somit erhält dieser Meßwert an einer Stelle der Arbeitsbreite eine sehr verlässliche Aussagekraft. Hierzu ist dann vorgesehen, daß eine in Fahrtrichtung gesehen langgestreckte und quer zur Fahrtrichtung schmale Meßvorrichtung vorgesehen ist. Entscheidend ist nämlich, daß über eine relativ lange Strecke in Fahrtrichtung des Schleuderstreuers gesehen der Dünger aufgefangen wird. Denn es kommt, wie schon vor gesagt, darauf an, die Streustärke und die richtige Einstellung des Düngerstreuers dadurch zu überprüfen, daß die auf einem stationären Streuprüfstand ermittelten Meßwerte (nur an einer Stelle mit dem gleichen Abstand von der Schleuderstreuermitte bzw. Arbeitsbreitenmitte) mit dem vom Landwirt ermittelten Wert verglichen werden. Man kann nämlich dann daraus den Schluß ziehen, daß bei der gleichen Düngermenge, die insgesamt vom Schleuderstreuer pro ha ausgebracht wird, wenn an dieser einen vorbestimmten Stelle die Sollmenge an Dünger ausgebracht wird, auch über den übrigen Bereich der Arbeitsbreite der Dünger in der gewünschten Streustärke ausgebracht wird und die Sollwertweite erreicht wird. Es ist also nicht wie bisher erforderlich, über die gesamte Arbeitsbreite den Dünger aufzufangen, um so festzustellen, ob die Streustärke gleichmäßig ist und die Sollwurfweite erreicht wird. Denn wesentlich ist, daß bisher, wenn die Auffangschalen eines stationären Prüfstandes in einer Reihe nebeneinander quer zur Fahrtrichtung aufgestellt werden und nur eine äußerst kleine Erstreckung in Fahrtrichtung haben, die auf dem Feld ermittelten Meßwerte viel zu großen Ungenauigkeiten unterliegen. Denn es ist hierbei zu berücksichtigen, daß evtl. Schwankungen des Schleuderstreuers oder ein ungenaues Ausrichten der Auffangschalen sich sofort extrem verfälschend auf das Meßergebnis auswirken. Wenn man jedoch, wie es die Erfindung vorsieht, die Meßvorrichtung in Fahrtrichtung streckt, werden diese Fehler ausgeglichen und kommen nicht zur Auswirkung. Und da es nach der Erfindung möglich ist nur an einer kleinen schmalen Stelle die Düngermenge aufzufangen, um hierhaus auf die Gleichmäßigkeit der Streustärke über die gesamte Arbeitsbreite schließen zu können, ergibt sich in überraschender Weise ein äußerst einfaches und für den Landwirt äußerst praktikabel zu handhabendes Meßverfahren.

Bei einer Variante des Meßverfahrens ist erfindungsgemäß vorgesehen, daß eine der Meßvorrichtungen in der Mitte des Streubereiches einer Streubahn und die andere Meßvorrichtung vorzugsweise im Schnittpunkt der Überlappung der nebeneinanderliegenden Streubereiche der Streubahnen aufgestellt sind. Infolge dieser Maßnahmen ist es lediglich erforderlich an zwei Stellen des Streubereiches einer Streubahn, d.h. der Bereich, der bei einer Überfahrt des Schleuderstreuers bestreut wird, aufzustellen. Hierbei wird die erste Meßvorrichtung in der Mitte der Streubahn aufgestellt, während die zweite Meßvorrichtung vorzugsweise im Schnittpunkt der Überlappung der nebeneinanderliegenden Streubahnen, d.h. am Ende der effektiven Arbeitsbreite des Schleuderstreuers aufgestellt wird. Bei dieser Meßmethode braucht der Landwirt anschließend nur noch die in den Meßvorrichtungen aufgefangenen Düngermengen miteinander zu vergleichen. Bei einer gleichen Größe bzw. einer geringen Abweichung innerhalb eines Toleranzbereiches ist das Streubild des Düngerstreuers "in Ordnung".

Zur Durchführung des Meßverfahrens weist die Meßvorrichtung mehrere in Fahrtrichtung gesehen unmittelbar hintereinander oder in Abstand hintereinander auf dem Boden abgestellte Auffangbehälter auf. Gegenüber den bekannten Meßvorrichtungen sind wesentlich weniger Auffangbehälter erforderlich und außerdem brauchen diese Auffangbehälter nur hintereinander in einer Linie in Fahrtrichtung bzw. parallel zur Fahrtrichtung aufgestellt zu werden. Hierdurch ergibt sich ein sehr genauer Meßwert. Der Landwirt braucht nicht mehr viele kleine Meßwerte aus den einzelnen quer zur Fahrtrichtung aufgestellten Auffangbehältern in eine Tabelle oder in ein Diagramm eintragen, um so in mühsamer sowie mühevoller und zeitraubender Arbeitsweise das Streubild auf seine Gleichmäßigkeit über die gesamte Arbeitsbreite zu überPrüfen, sondern vielmehr kann er die Düngermenge in den einzelnen in Fahrtrichtung aufgestellten Auffangbehältern zusammenkippen, so daß er eine einzige Düngermenge, die er auszuwiegen hat, erhält. Da diese Düngermenge nach einer vorgegebenen Tabelle mit dem in der Streutabelle enthaltenen repräsentativen Werte zu vergleichen ist, wird die Arbeit für den Landwirt äußerst einfach. Er braucht dann nur noch, falls der Istwert vom Sollwert abweicht, die Maschine entsprechend den Hinweisen in der Streutabelle anders einzustellen. Ein zu kleiner Istwert bedeutet zu kleine oder zu große Wurfweite.

Hierbei können die Auffangbehälter in einem Rahmen, der auf dem Boden abgestellt ist, pendelnd aufgehängt sein. Hierdurch wird in jedem Falle sichergestellt, daß die Auffangbehälter horizontal ausgerichtet sind, so daß wirklich unverfälschte Meßwerte erzielt werden können.

Zur Ermittlung der repräsentativen Werte sind die Auffangbehälter zusätzlich zu den normalen Auffangbehältern zur Ermittlung des Streubildes erhöht gegenüber den normalen Auffangbehältern an der Meßstelle die , vorzugsweise an der Stelle des Schnittpunktes der Überlappung nebeneinanderliegender Streubereiche bzw. am Ende der Arbeitsbreite sich befindet, angeordnet. Infolge dieser Maßnahmen werden bereits bei der Ermittlung des repräsentativen Wertes die Verhältnisse auf dem Feld mit berücksichtigt, wo ja die Auffangbehälter auf der Bodenoberfläche abgestellt sind, so daß die Öffnungen der Auffangbehälter sich in einem Abstand zur bestreuenden Fläche befinden, während der Schleuderstreuer, wenn der Landwirt die Arbeitsbreite bzw. die Gleichmäßigkeit des Streubildes überprüft, in bezug auf die Bodenoberfläche bzw. die zu bestreuende Fläche normal eingestellt ist. Die Auffangbehälter mit ihrer Auffangöffnung befinden sich erhöht gegenüber der Bodenoberfläche, so daß man durch diese Erhöhung der Auffangöffnung des Auffangbehälters bei der Ermittlung des repräsentativen Wertes auf dem Prüfstand die Verhältnisse schafft, die bei Überprüfung durch den Landwirt vorhanden sind. Aus diesem Grunde wird in erfindungsgemäßer Weise, wie vor beschrieben der Auffangbehälter zur Ermittlung des repräsentativen Wertes erhöht gegenüber den übrigen Auffangbehältern des Streustandes angeordnet. Es werden also die späteren Verhältnisse simuliert.

Selbstverständlich läßt sich das erfindungsgemäße Meßverfahren bzw. die erfindungsgemäße Meßvorrichtung auch zur Ermittlung der Arbeitsbreite und der Überprüfung der gleichmäßigen Streustärke nicht nur bei der Bodendüngung, sondern auch bei der Schosser- und Spätdüngung, wenn die Pflanzen schon hoch aufgewachsen sind, anwenden und einsetzen. Hierzu sind dann die Auffangbehälter entsprechend auf dem Feld anzuordnen, wie die Auffangbehälter zur Ermittlung des jeweiligen repräsentativen Wertes in der Streutabelle auf dem stationären Streustand angeordnet worden sind. Bei der Spätdüngung können somit die Auffangbehälter - je nachdem nach welcher Methode die Auffangbehälter zur Ermittlung des repräsentativen Wertes angeordnet waren - aufgestellt werden. Hierbei ist es möglich, die Auffangbehälter in den Getreidebestand auf den Boden abzustellen oder die Auffangbehälter so hoch anzuheben, daß ihre Oberkante auf Höhe der Getreidespitzen liegt oder um das Maß ihrer Höhe über die Getreidespitzen anzuheben. Entscheidend hierbei ist, wie die repräsentativen Werte ermittelt worden sind. Genauso, also in gleicher Anordnung, müssen auch die Auffangbehälter auf dem Feld oder der Wiese aufgestellt werden.

Die Erfindung beschränkt sich nicht darauf, die Auffangbehälter in Fahrtrichtung gestreckt nur an einer Stelle der Arbeitsbreite, vorzugsweise im Schnittpunkt der Überlappungsbereiche aufzustellen, sondern es ist mit in die Erfindung eingeschlossen, daß auch an zwei und mehr Stellen der Arbeitsbreite quer zur Fahrtrichtung in Fahrtrichtung gesehen langgestreckte oder mehrere kleine Auffangbehälter hintereinander angeordnet sind. Entscheidend hierbei ist jedoch, daß jeweils genau angegeben wird, mit welchem Abstand von der Arbeitsbreitenmitte bzw. von der Mitte des Schleuderstreuers und in welcher Höhe die Auffangbehälter bei der Ermittlung des repräsentativen Wertes aufgestellt waren, damit der Landwirt zu Überprüfung der richtigen Einstellung seines Schleuderstreuers für den jeweils auszubringenden Dünger die Auffangbehälter richtig aufstellen kann und so den entsprechenden repräsentativen Wert erhält. Mehrere quer zur Fahrtrichtung an verschiedenen Stellen der Arbeitsbreite aufgestellte Auffangbehälter wird man bei Streubildern von Düngersorten bevorzugen, die keine klare Tendenz bzw. kein klares bzw. kein erkennbares "Dreiecksstreubild" aufweisen. Bevorzugt bei diesen streubildern werden an markanten Stellen des Streubildes dann innerhalb der Arbeitsbreite an zwei oder mehr Stellen die sich in Fahrtrichtung erstreckenden Vorratsbehälter angeordnet.

Mit der Erfindung ist es also möglich mit nur einem oder wenigen Meßpunkten, die aber genau meßbar gemacht worden sind, jeden Düngerstreuer auf jede Düngersorte so einzustellen, daß eine gleichmäßige Streustärke und die gewollte Arbeitsbreite erreicht werden. Dieses ist in einfachster Weise vom Landwirt selbst auf dem Feld mit der einfachen erfindungsgemäßen Meßvorrichtung möglich.

Dadurch, daß die Oberkante der Auffangbehälter auf dem Feld sich etwa 20 bis 40 cm oberhalb der Bodenoberfläche befinden, ergibt sich der große Vorteil, daß vor dem Auffangbehälter auf den Boden fallende Körner nicht in den Auffangbehälter hineinspringen und somit das Meßergebnis nicht verfälschen können.

Die repräsentativen Meßwerte, die man auch als Richtmeßwerte oder als Richtwerte bezeichnen kann, werden zusätzlich zu den bisher üblichen Werten in der Streutabelle für jede Arbeitsbreite und vorzugsweise für jede Düngermenge angegeben, so daß der Landwirt direkt aus der Streutabelle ablesen kann, ob sein Schleuderstreuer richtig eingestellt ist, damit der Dünger über die vorgesehene Arbeitsbreite in gleichmäßiger Streustärke verteilt wird. Hierzu muß der Landwirt dann wie bisher zunächst eine Abdrehprobe durchführen, um festzustellen, ob der Schleuderstreuer tatsächlich bei der eingestellten Ausbringmengenstellung auch tatsächlich die gewünschte Ausbringmenge ausgebracht wird. Wenn die Sollausbringmenge eingestellt ist, wird die Überprüfung der Arbeitsbreite und der Streustärke vorgenommen.

Weitere Einzelheiten der Erfindung sind den übrigen Unteransprüchen, der Beispielsbeschreibung und den Zeichnungen zu entnehmen. Hierbei zeigen

Fig. 1 in schematischer Darstellungsweise ein Streubild mit Überlappungszonen und gleichmäßiger Streustärke,

Fig. 2 ein Streubild mit Überlappungszonen und ungleichmäßiger Streustärke,

Fig. 3 in schematischer Darstellungsweise die Ermittlung des Gesamtstreubildes auf einem stationären Prüfstandes in der Draufsicht,

Fig. 4 die Darstellung des Streustandes und die Ermittlung des Streubildes gemäß Fig. 3 in der Ansicht von hinten,

Fig. 5 in schematischer Darstellungsweise die Ermittlung des Streubildes auf dem stationären Prüfstand und der repräsentative Meßwert in erfindungsgemäßer Weise in der Draufsicht

Fig. 6 die Darstellung des Streustandes und die Ermittlung des Streubildes in erfindungsgemäßer Weise gemäß Fig 5 er Ansicht von hinten,

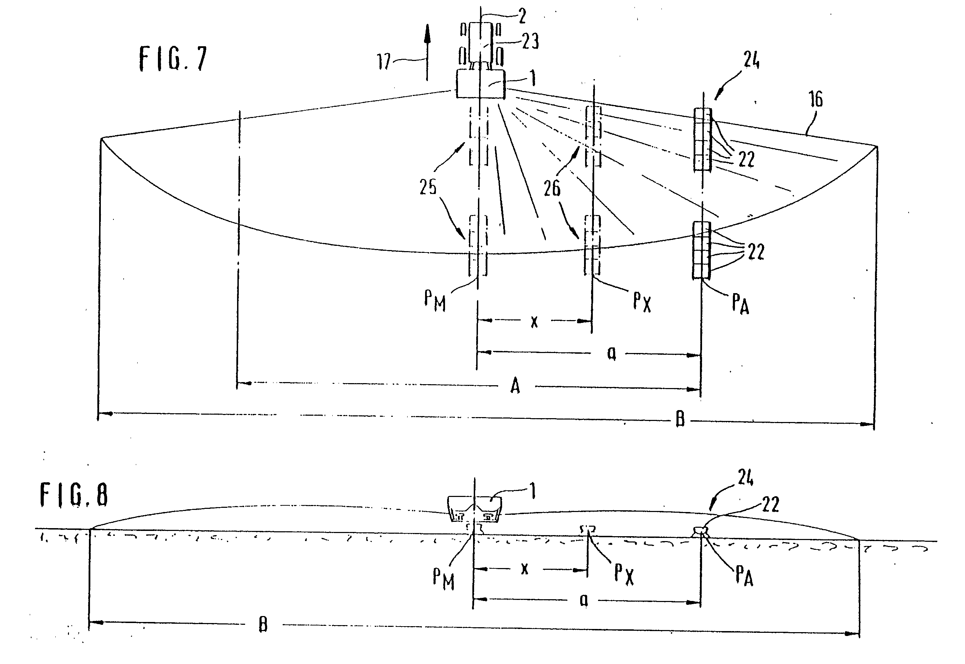

Fig. 7 das erfindungsgemäße Meßverfahren und die erfindungsgemäße Anordnung der Meßvorrichtung in schematischer Darstellung in der Draufsicht,

Fig. 8 die Darstellung des erfindungsgemäßen Meßverfahrens und die Anordnung der erfindungsgemäßen Meßvorrichtungen gemäß Fig. 7 in der Ansicht von hinten,

Fig. 9 die schematische Darstellung der Durchführung des erfindungsgemäßen Meßverfahrens und der Anordnung der Auffangbehälter in erfindungsgemäßer Weise in der Draufsicht,

Fig. 10 eine andere Anordnung von erfindungsgemäßen Auffangbehältern,

Fig. 11 eine weitere Anordnung der Auffangbehälter in erfindungsgemäßer Weise,

Fig. 12 eine weitere erfindungsgemäße Anordnung der Auffangbehälter,

Fig. 13 einen erfindungsgemäßen Auffangbehälter in der Ansicht von hinten,

Fig. 14 den Auffangbehälter gemäß Fig. 13 in der Seitenansicht,

Fig. 15 den Auffangbehälter gemäß Fig. 13 in vergrößerter Darstellung und

Fig. 16 einen erfindungemäßen Volumenmeßbecher in schematischer Darstellung.

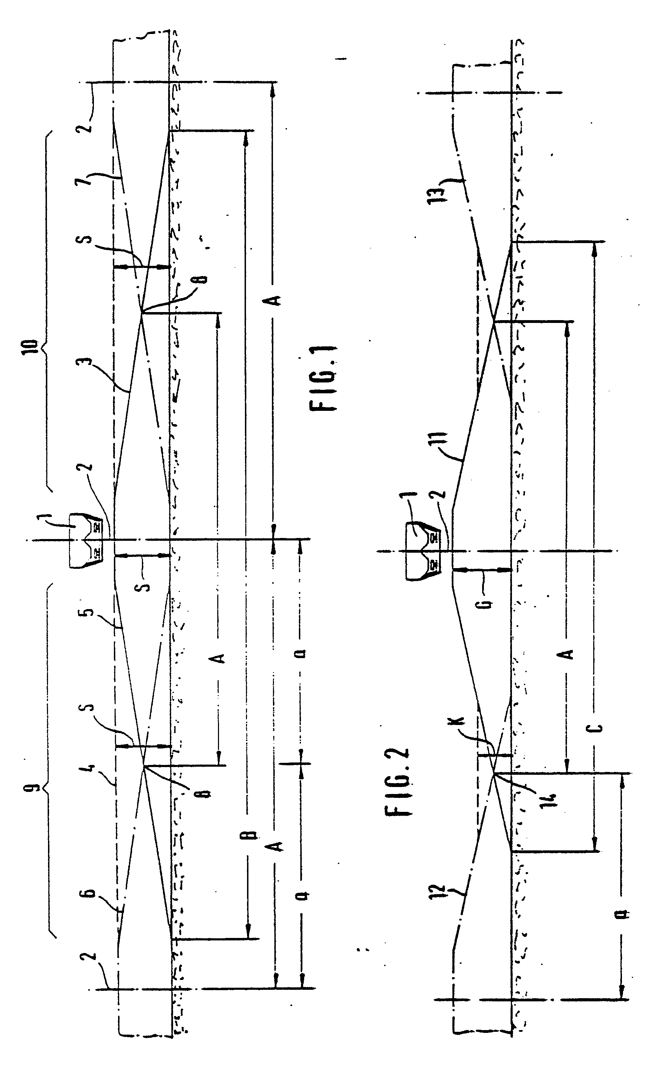

Die Fig. 1 zeigt ein Streubild mit einer gleichmäßigen Streustärke S über die gesamte Arbeitsbreite A. Die Düngemittelpartikel werden von dem Schleuderstreuer 1 über die Streubreite B abgeschleudert. Und zwar in der Weise, daß die Düngemittelpartikel von der Streuermitte 2 bzw. Arbeitsbreitenmitte 2 seitlich nach außen in abnehmender Streustärke, wie dieses durch die Linie 3 angedeutet ist, über die gesamte Streubreite B abgeschleudert werden. Durch Überlappen nebeneinanderliegender Streubahnen, deren Arbeitsbreitenmitte 2 in einem Abstand A, der der Arbeitsbreite entspricht von der jeweils benachbarten Streubahnmitte 2 liegt, entsteht auch in den abfallenden Streustärkenbereichen jedes einzelnen Streufächers die Gesamtstreustärke S, wie dieses mit den gestrichelten Linien 4 angedeutet ist. Seitlich neben dem mittleren Streufächer 5, der mit durchzogenen Linien dargestellt ist, liegen jeweils die unmittelbar benachbarten Streufächer 6 und 7, die mit strichpunktierten Linien dargestellt sind. Am Ende der Arbeitsbreite A befindet sich der Schnittpunkt 8 der Überlappungszonen 9 und 10. Der Schnittpunkt 8 befindet sich immer im halben Abstand A, der in der Fig. 1 als a bezeichnet ist von der Arbeitsbreitenmitte 2. Wenn durch das Aneinanderreihen nebeneinanderliegender Streubahnen, deren Arbeitsbreitenmitte 2 sich jeweils im Abstand der Arbeitsbreite A voneinander befinden, die gleichmäßige Streustärke S entsteht, ist der Schleuderstreuer 1 auf die auszubringende Düngersorte richtig eingestellt.

Die Fig. 2 zeigt ein Streubild mit einer ungleichmäßigen Streustärke. Der Schleuderstreuer 1 in der Fig. 2 ist auf die auszubringende Düngersorte falsch eingestellt. Die Arbeitsbreite A wird durch den Fahrgassenabstand vorgegeben und muß jeweils eingehalten werden. Die Düngemittelpartikel werden von dem Schleuderstreuer 1 in der Fig. 2 über die Streubreite C beidseitig von der Mitte des Schleuderstreuers 1 bzw. der Arbeitsbreitenmitte 2 über den Streubereich C abgeschleudert. Die Streustärke des mit durchzogenen Linien dargestellten Streubildes 11 sowie die Streubilder 12 und 13 der nächstliegenden Streubahnen, die mit strichpunktierten Linien dargestellt sind, fallen nach außen in Richtung des Endes der Streubreite C ab. Durch Überlappen der nebeneinanderliegenden Streubilder 11 und 12 sowie 11 und 13 entsteht im Schnittpunkt 14 der Streubilder die zu kleine Streustärke K während sich in der Nähe der Arbeitsbreitenmitte 2 die zu große streustärke G ergibt. Dies bedeutet also, daß der Schleuderstreuer 1 auf die auszubringende Düngersorte nicht richtig eingestellt ist und die Düngemittelpartikel aufgrund ihrer Beschaffenheit nicht weit genug nach außen abgeschleudert werden. Hierdurch ergibt sich eine zu große Streustärke G in der Arbeitsbreitenmitte 2 und eine zu kleine Streustärke K am Ende der Arbeitsbreite A im Schnittpunkt 14. Bei dem Beispiel gemäß Fig. 2 fällt die Streustärke also von der Arbeitsbreitenmitte 2 in Richtung des Endes der Arbeitsbreitenmitte 2 ab. Dies bedeutet also, der Schleuderstreuer 1 muß anders eingestellt werden, damit die Düngemittelpartikel weiter von dem Schleuderstreuer 1 nach außen geworfen werden.

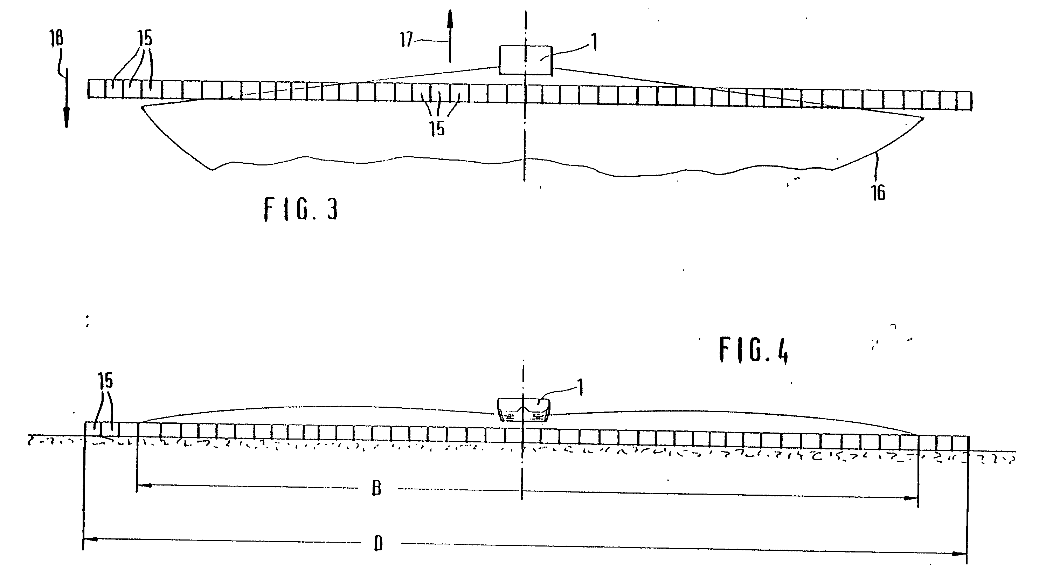

Wird der Dünger entsprechend des Beispieles gemäß Fig. 2 auf Getreideflächen ausgestreut, so kommt es zu der berüchtigten Streifenbildung, also zu überdüngten und unterdüngten Getreidestreifen. Die Fig. 3 und 4 zeigen die Ermittlung des Streubildes eines Schleuderstreuers 1 auf einem stationären Hallenprüfstand wobei über eine große Breite D, die größer als die Streubreite B ist, nebeneinander gleich große Auffangbehälter 15 mit einer quadratischen Fläche, deren Seitenlänge 0,5 m ist, dicht nebeneinander angeordnet sind. Über die Auffangbehälter 15 werden die von dem Schleuderstreuer 1 über die Wurfweite B in einem Streufächer 16 abgeschleuderten Düngemittelpartikel aufgefangen und aus den in den einzelnen Auffangbehältern 15 aufgefangenen Düngemittelpartikelmengen wird in bekannter und daher nicht näher tatsächlichen erläuterter Weise dass gesamte Streubild mit der Streustärke ermittelt. Durch Überlappen nebeneinanderliegender Streufächer 16 ergibt sich dann ein Gesamtstreubild, wie es in den Fig. 1 und 2 dargestellt ist. Hier auf dem Streustand gemäß den Fig. 3 und 4 kann dann die jeweilige Schleuderstreuereinstellung für jede Arbeitsbreite und jede Düngermenge ermittelt werden, so daß jeweils ein Streubild erreichbar ist, bei dem die Sollarbeitsbreite A mit einer über die gesamte Arbeitsbreite A reichenden gleichmäßigen Streustärke S erreicht wird, wenn nebeneinanderliegende und sich überlappende Streubahnen überlappt werden.

Um die von dem Schleuderstreuer 1 in dem Streufächer 16 abgeschleuderten Düngemittelpartikeln mit den Auffangbehältern 15, die nebeneinander in einer Reihe zur quer Fahrtrichtung aufgestellt sind, aufzufangen, wird entweder der Schleuderstreuer 1 in Fahrtrichtung 17 über die Auffangbehälter 15 hinweggefahren oder aber der Schleuderstreuer 1 wird während des Streuversuches stationär festgehalten und die Auffangbehälter 15, die in einem fahrbaren Rahmen angeordnet sind, werden in Pfeilrichtung 18 vom Schleuderstreuer 1 weggefahren, so daß die Düngemittelpartikel, die von dem Schleuderstreuer 1 in dem Streufächer 16 abgeschleudert werden über, den gesamten Streufächerbereich aufgefangen werden.

Wenn der Landwirt bisher die richtige Einstellung seines Schleuderstreuers für seinen auszubringenden Dünger, der von Charge zu Charge in seiner Beschaffenheit differieren kann, überprüfen wollte, so mußte er bisher quer zur Fahrtrichtung des Schleuderstreuers sehr viele kleine Auffangbehälter, wie in den Fig. 3 und 4 dargestellt ist nebeneinander über den gesamten Streubereich des Schleuderstreuers aufstellen und diese Auffangbehälter genau ausrichten. Anschließend, wenn er über die Düngerbehälter mit seinem Schleuderstreuer hinweggefahren war, mußte er die vielen einzelnen kleinen Düngemittelmengen in den einzelnen sehr genau Auffangbehältern einzeln auswiegen und sie in einer Tabelle oder einem Diagramm notieren um so festzustellen, ob über die Sollarbeitsbreite eine gleichmäßige Streustärke durch Überlappen nebeneinanderliegender Streubahnen erreicht wird.

Um nun dem Landwirt ein sehr einfaches Meßverfahren an die Hand zu geben, so daß er mit einer sehr einfachen Meßvorrichtung die richtige Einstellung seines Schleuderstreuers überprüfen kann, soll nur an einer einzigen Stelle der Arbeitsbreite eine Meßvorrichtung aufgestellt werden, um nur einen Meßwert zu erhalten. Hierzu ist es zunächst erforderlich, daß vom Hersteller des Schleuderstreuers auf einem stationären Prüfstand dieser repräsentative Meßwert, der auch als Richtwert oder Richtmeßwert bezeichnet werden kann, ermittelt wird.

Hierzu werden dann am Ende der Arbeitsbreite A im Abstand a von der Arbeitsbreitenmitte 2, der der halben Arbeitsbreite A entspricht zusätzlich zu den Auffangbehältern 15, die sich quer zur Fahrtrichtung des Schleuderstreuers 17 nebeneinander angeordnet sind sich in Fahrtrichtung 17 erstreckende Auffangbehälter 19 angeordnet. Zur Ermittlung des repräsentativen Meßwertes beim Hersteller auf einem stationären Prüfstand ist es nicht unbedingt erforderlich, daß vier zusätzliche Auffangbehälter 19 aufgestellt werden. Es kann auch durchaus ausreichen nur einen zusätzlichen Auffangbehälter 19 aufzustellen. Durch den von dem Auffangbehälter 19 aufgefangenen Düngermengenwert ergibt sich bei einem Streubild, bei welchem die Sollarbeitsbreite A mit einer gleichmäßigen Streustärke S durch Überlappung nebeneinanderliegender Streubahnen, wie das die Fig. 1 zeigt, ein Wert, der das Erreichen der gleichmäßigen Streustärke bei einer Solldüngermenge und bei einer vorgegebenen Arbeitsbreite A repräsentiert. Der jeweils für eine Düngermenge und eine Arbeitsbreite ermittelte Meßwert A an dem Punkt $P_A$ (Punkt Arbeitsbreite) wird zusätzlich zu den vorhandenen Mengenwerten in die Streutabelle eingefügt. Dieser repräsentative Wert wird also auf einem Streuprüfstand im Zusammenhang mit der Erstellung eines gleichmäßigen Streubildes ermittelt und zusätzlich zu den Mengenwerten in die streutabelle eingefügt. Gleichzeitig wird noch in der Streutabelle angegeben, an welchem Punkt dieser repräsentative Meßwert ermittelt wurde und zu ermitteln ist. Man wird den Punkt $P_A$ , also den Punkt am Ende der Arbeitsbreite A bevorzugen.

Bei einigen Düngersorten bzw. Streubildern kann es erforderlich sein, daß man noch einen weiteren repräsentativen Meßwert, beispielsweise in der Streuermitte bzw. der Arbeitsbreitenmitte 2 ermittelt und in die Streutabelle einfügen muß. Hierzu werden dann zusätzlich zu den Auffangbehältern 15 noch in der Streubreitenmitte 2 ein oder mehrere mit strichpunktierten Linien dargestellte Auffangbehälter 20 zur Ermittlung des repräsentativen Meßwertes an dem Punkt $P_M$ (Mitte der Arbeitsbreite) ermittelt und in die Streutabelle zusätzlich eingefügt, wobei angegeben wird, daß dieser Meßwert in der Mitte der Arbeitsbreite ermittelt worden ist. Des weiteren kann es u.U. erforderlich sein, daß noch an einem weiteren Punkt zwischen $P_M$ und $P_A$ ein repräsentativer Meßwert ermittelt wird und zwar am Punkt $P_X$ An Punkt $P_X$ werden dann zusätzlich ein oder mehrere Auffangbehälter 21, die mit stichpunktierten Linie dargestellt sind, aufgestellt. Der Punkt $P_X$ , ist ein besonders markanter Punkt für die Streubildcharakteristik und Streustärkencharakteristik. Auch dieser Punkt $P_X$ wird dann unter Angabe des Abstandes x von der Streubreitenmitte 2 in die Streutabelle eingefügt.

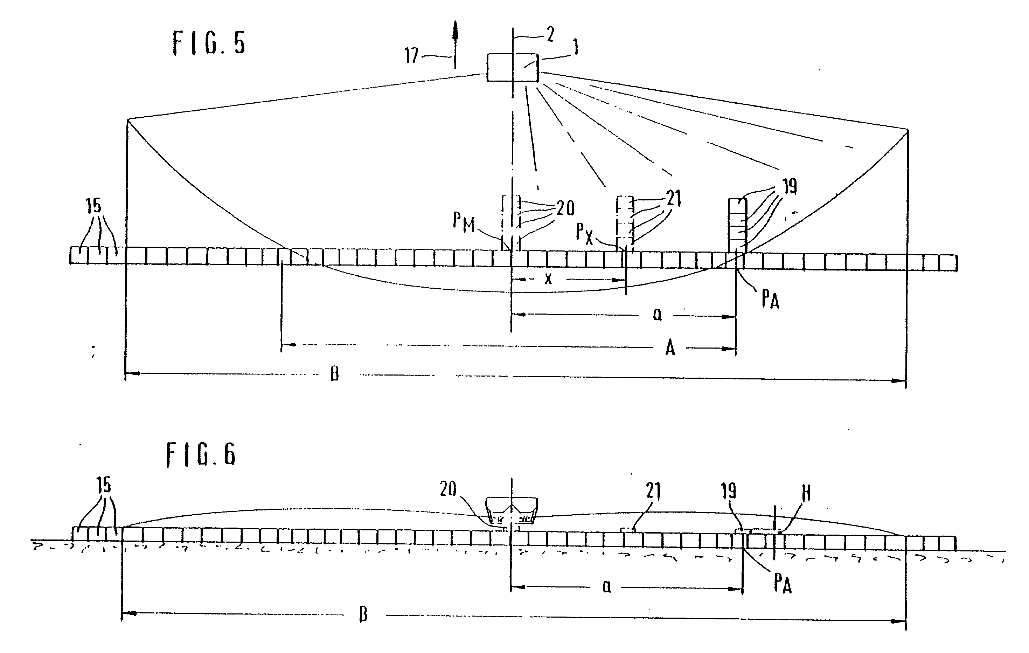

Diese zusätzlichen Auffangbehälter 19 sowie 20 oder 21 werden zur Ermittlung der repräsentativen Werte auf dem Streustand gemäß den Fig. 5 und 6 erhöht gegenüber den Auffangbehältern 15 angeordnet und zwar um das Maß, um welches die Auffangbehälter der Meßvorrichtung auf dem Feld gegenüber der zu bestreuenden Fläche erhöht bzw. erniedrigt angeordnet werden. In einfacher Weise entspricht das Maß H der Höhe der Auffangbehälter der Meßvorrichtung die auf dem Feld verwendet werden. Hierdurch erhält man sowohl auf dem Streuerprüfstand als auch später bei der Meßvorrichtung auf dem Feld vergleichbare Werte. Es werden also auf dem Streuprüfstand durch die erhöhte bzw. erniedrigte Anordnung der Auffangbehälter 19 sowie 20 und 21 die gleichen Verhältnisse wie auf dem Feld geschaffen. Des weiteren wird man in bevorzugter Weise zur Ermittlung der repräsentativen Werte Auffangbehälter 19, 20 und 21 verwenden, die gleich den für die Meßvorrichtung für das Feld vorgesehenen Auffangbehältern sind.

Um die richtige Einstellung seines Schleuderstreuers 1 auf dem Feld zu überprüfen, stellt der Landwirt im Abstand a von der Arbeitsbreitenmitte 2 die Auffangbehälter 22 auf. Der Abstand a entspricht der halben Arbeitsbreite A. Anschließend fährt der Landwirt mit dem Schleuerstreuer 1, der an dem Dreipunktkraftheber des Schleppers 23 angebaut ist, der Arbeitsbreitenmittenlinie 2 entlang, wobei von dem Schleuderstreuer 1 die Düngemittelpratikel über dem Bereich des Streufächers 16 abgeschleudert werden. Am Punkt $P_A$ werden die Düngemittelpartikel von den Auffangbehältern 22 aufgefangen. Die Meßvorrichtung wird von den Auffangbehältern 22 gebildet, wobei mehrere Meßvorrichtungen in Fahrtrichtung 17 gesehen hintereinanderliegend angeordnet sind, so daß sich in Fahrtrichtung 17 eine langgestreckte und quer zur Fahrtrichtung 17 schmale Meßvorrichtung 24 ergibt. Nachdem der Landwirt mit seinem Schleuderstreuer über diese Meßvorrichtung 24 gefahren ist, so daß die Düngemittelpartikel des Streufächers 16 aufgefangen worden sind, werden die in den Auffangbehältern 22 der Meßvorrichtung 24 aufgefangene Düngermengen in einem Meßgefäß zusammengekippt und ausgewogen. Dieser ermittelte Düngerwert ist der Meßwert der Meßvorrichtung 24 der mit dem repräsentativen Wert für die gewünschte Arbeitsbreite A, der in der Streutabelle enthalten ist, vergleichen wird. Stimmt dieser Meßwert mit dem repräsentativen Meßwert für die gewünschte Arbeitsbreite überein, so ist der Schleuderstreuer 1 richtig eingestellt und es wird bei der gewünschten Arbeitsbreite A der Dünger in gleichmäßiger Streustärke durch Überlappung nebeneinanderliegender Streubahnen erreicht. Durch die langgesteckte Meßvorrichtung 24 wird der Dünger über eine relativ lange Strecke aufgefangen. Somit ergibt sich ein sehr genauer Meßwert.

Die Auffangbehälter 22 der Meßvorrichtung 24 sind am Punkt $P_A$, also an dem Schnittpunkt der Überlappung nebeneinanderliegender Streubereiche sowie am Ende der Arbeitsbreite A angeordnet bzw. aufgestellt.

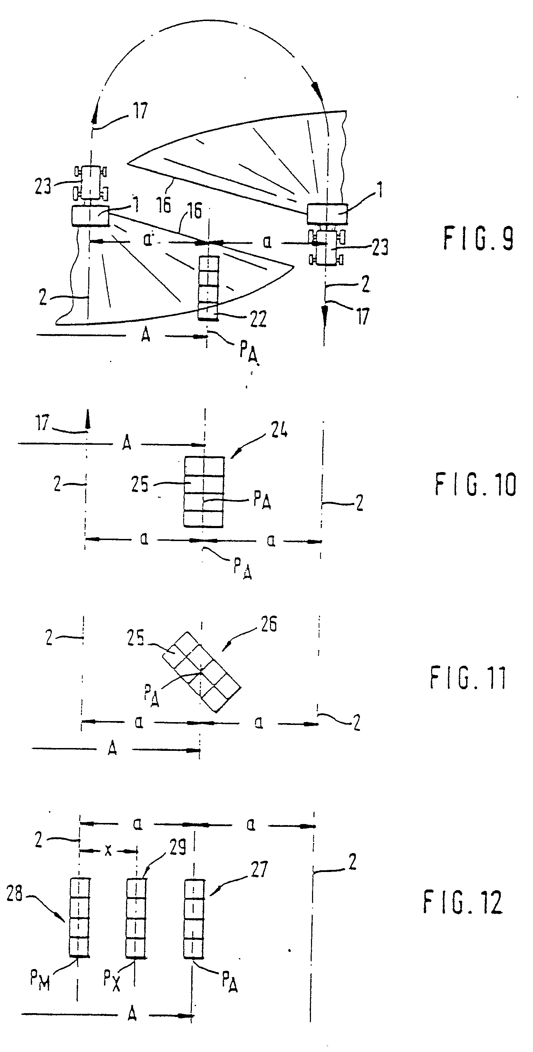

Falls es die Streutabelle vorschreibt noch an weiteren Stellen der Arbeitsbreite A beispielsweise am Punkt $P_M$, der die Arbeitsbreitenmitte kennzeichnet, werden dort die mit strichpunktierten Linien angedeuteten Auffangbehälter der Meßvorrichtung 25 angeordnet. Falls es die streutabelle weiter vorschreibt, werden an dem Punkt $P_X$ in Fahrtrichtung langgestreckten und quer zur Fahrtrichtung schmalen Auffangbehälter, die mit strichpunktierten Linien dargestellt sind, der Meßvorrichtung 26 angeordnet. Auch diese von den Meßvorrichtungen 25 und 26 aufgefangenen Düngermengen werden mit denen in der Streutabelle angegebenen repräsentativen Werte für diese Punkte $P_M$ und $P_X$ verlichen. Stimmen diese vom Landwirt ermittelten Werte mit dem in der Streutabelle angegebenen repräsentativen Werte überein, so wird der auszubringende Dünger mit der Einstellung des Schleuderstreuers 1 über die gesamte Arbeitsbreite A durch Überlappung nebeneinanderliegender Streubahnen in einer gleichmäßigen Streustärke, wie dieses in Fig. 1 dargestellt ist, ausgebracht. Falls diese Meßwerte jedoch von den repräsentativen Werten abweichen, so ergibt sich ein Streubild mit einer ungleichmäßigen Streustärke über die Arbeitsbreite A durch Überlappung nebeneinanderliegender Streubahnen, wie dieses beispielsweise in Fig. 2 dargestellt ist. Falls dies der Fall ist, muß die Einstellung des Schleuderstreuers 1 verändert werden, so daß ein Streubild mit einer gleichmäßigen Streustärke beispielsweise gemäß Fig. 1 erreicht wird. In diesem Falle verändert der Landwirt, wenn sich zunächst keine Übereinstimmung zwischen den Meßwerten des Landwirtes und den repräsentativen Werten in der Streutabelle ergibt, die Einstellung seines Schleuderstreuers und fährt nochmal über die Meßvorrichtung 22 bzw. 25 und 26 hinweg und ermittelt nochmals die Düngermenge dieser in den Auffangbehältern aufgefangenen Düngermenge und vergleicht diesen jetzt ermittelten Meßwert mit dem in der Streutabelle angegebenen repräsentativen Meßwert. Wenn nun dieser Meßwert des Landwirtes mit dem repräsentativen Wert in der Streutabelle übereinstimmt, ist der Schleuderstreuer 1 für die auszubringende Düngersorte richtig eingestellt, so daß Düngemittel mit einer gleichmäßigen Streustärke über die gesamte Arbeitsbreite A durch Überlappung nebeneinanderliegender Streubahnen in gleichmäßiger Streustärke, beispielsweise gemäß Fig. 1 ausgebracht wird. Die Fig. 9 zeigt eine bevorzugte Methode der Durchführung des erfindungsgemäßen Meßverfahren und der Aufstellung der erfindungsgemäßen Meßvorrichtung. In dem Abstand a, der der halben Arbeitsbreite A entspricht, werden die Auffangbehälter der Meßvorrichtung 22 so aufgestellt, daß sich eine in Fahrtrichtung 17 langgestreckte und quer zur Fahrtrichtung A schmale Meßvorrichtung ergibt. Zunächst fährt der Landwirt in Pfeilrichtung 17 mit seinem Schlepper 23, an dem der Schleuderstreuer 1 angebaut ist, der Arbeitsbreitenmittenlinie 2 entlang, so daß der Dünger an der Stelle $P_A$ in die Auffangbehälter der Meßvorrichtung 22 geworfen wird. Anschließend wendet der Landweirt seinen Schlepper und fährt im Abstand a auf der anderen Seite der Meßvorrichtung 22 der Arbeitsbreitenmittelinie 2 der nächsten Arbeitsbahn entlang, so daß der Dünger wiederum an dem Punkt $p_A$ von den Auffangbehältern der Meßvorrichtung 22 aufgefangen wird. Die Meßvorrichtung 22 ist somit zweifach von den Düngemittelpartikeln des Streufächers 16 überstrichen worden, so daß sich jetzt in den Auffangbehältern der Meßvorrichtung 22 bereits die Düngemittelmenge entsprechend der Überlappung der Streufächer nebeneinanderliegender Streubahnen befindet. Des weiteren sind die Auffangbehälter der Meßvorrichtung 22 am Punkt $P_A$ also im Schnittpunkt der Überlappung der beiden nebeneinanderliegender Streubereiche angeordnet worden. Anschließend wird die in den Auffangbehältern der Meßvorrichtung 22 aufgefangenen Düngermenge ausgewogen und mit den in der Streutabelle angegebenen repräsentativen Meßwerten verglichen. Diese gemäß Fig. 9 beschriebene Durchführung des erfindungsgemäßen Meßverfahrens hat den Vorteil, daß beispielsweise Windeinflüsse, die zu einer Verschiebung des Streufächers in Richtung der Windrichtung führen, ausgeglichen werden, da jeweils entgegengesetzt de Dünger von den Auffangbehältern der Meßvorrichtung aufgefangen worden ist.

Die Fig. 10 zeigt eine weitere Anordnung der erfindungsgemäßen Meßvorrichtung. Diese Meßvorrichtung 24 besteht aus vier in Fahrtrichtung hintereinander und zwei quer zur Fahrtrichtung 17 angeordneten Auffangbehältern 25. Die Auffangbehälter 25 der Meßvorrichtung 24 sind am Punkt $P_A$, also im Abstand a, der dem halben Abstand der Arbeitsbreite A entspricht, am Schnittpunkt der Überlappung nebeneinanderliegender Streubereiches bzw.

am Ende der Arbeitsbreite A ausgestellt.

Die Fig. 11 zeigt eine weitere Anordnung einer Meßvorrichtung. Diese Meßvorrichtung 26 weist die Auffangbehälter 25 auf. Die Meßvorrichtung 26 ist am Punkt , also im Abstand a, der der halben Arbeitsbreite A entspricht, angeordnet. Die Meßvorrichtung 26 weist jedoch die langgestreckte Meßvorrichtung in einem Winkel von etwa 45° zur Fahrtrichtung verschwenkt am Punkt $P_A$ aufgestellt ist.

Die Fig. 12 zeigt eine weitere Anordnung der erfindungsgemäßen Meßvorrichtung für das erfindungsgemäße Meßverfahren. Hierbei ist zunächst am Punkt $P_{A\ die}$ Meßvorrichtung 27 aufgestellt. Der Punkt $P_A$ befindet sich in einem Abstand a von der Arbeitsbreitenmitte 2. Der Abstand a entspricht der halben Arbeitsbreite A. Des weiteren ist an der Stelle der Arbeitsbreitenmitte 2, also am Punkt $P_M$ die Meßvorrichtung 28, die ebenfalls eine in Fahrtrichtung langgestreckte und quer zur Fahrtrichtung eine schmale Ausdehnung aufweist, angeordnet. Außerdem ist noch im Abstand x am Punkt $P_X$ die Meßvorrichtung 29 aufgestellt. Die Durchführung des Meßverfahrens geschieht wiederum eine schmale und langgestreckte Form auf, wobei in der vorbeschriebenen Weise, beispielsweise gemäß Fig. 9.

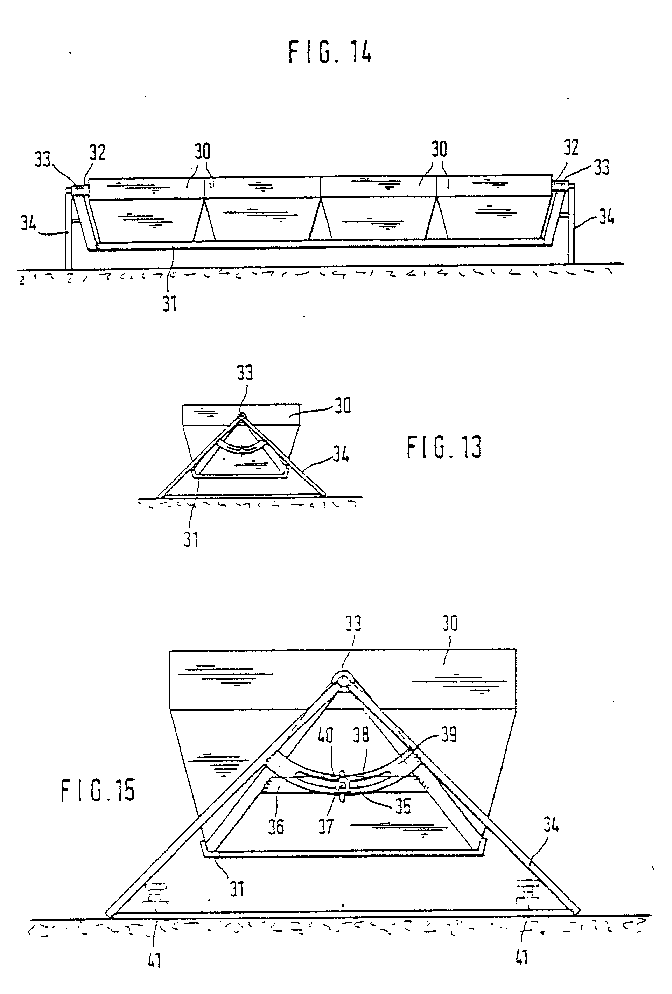

In den Fig. 13 bis 15 ist eine erfindungsgemäße Meßvorrichtung dargestellt. Diese Meßvorrichtung weist vier einzelne Auffangbehälter 30 auf. Diese Auffangbehälter 30 sind in dem Pendelrahmen 31 hintereinander aufgestellt. Der Pendelrahmen 31 weist an seinen beiden Stirnseiten 32 jeweils das Gelenk 33 auf, mit dem der Pendelrahmen mit dem Abstellrahmen 34 verbunden ist. Hierdurch ist es möglich, daß sich die Auffangbehälter 30 automatisch durch ihre pendelnde Aufhängung so ausrichten, so daß ihre Oberkanten horizontal ausgerichtet sind. Um ein Schwanken der Auffangbehälter 30 während des Meßvorganges zu vermeiden, ist zwischen dem Abstellrahmen 34 und dem Pendelrahmen 31 die Feststellvorrichtung 35 angeordnet. Diese Feststellvorrichtung 35 besteht aus der an dem Pendelrahmen 31 angeordneten Strebe mit dem Klemmbolzen 37. Dieser Klemmbolzen 37 ragt in ein Langloch 38 der an dem Astellrahmen 34 angeordneten Strebe 39. Auf dem Klemmbolzen 37 wird von außen die Klemmutter 40 aufgesetzt, so daß hierdurch die Stellung des Pendelrahmens 31 und somit der Auffangbehälter 30 gegenüber dem Abstellrahmen 34 arretiert werden kann. Des weiteren können am unteren Ende des Abstellrahmens 34 die mit strichpunktierten Linien angedeuteten Ausgleichschrauben 41 angeordnet sein, über die zu große Bodenunebenheiten ausgeglichen werden können, so daß die Abstellrahmen 34 fest auf dem Boden aufstehen. Außerdem ist es möglich, daß an dem Abstellrahmen 34 nicht dargestellte Verlängerungsstangen angebracht werden können, so daß beispielsweise für die Getreidespätdüngung die Auffangbehälter 30 in einem Abstand zur Bodenoberfläche relativ hoch und zwar zumindest bis auf Höhe der Getreidespitze angeordnet werden können, um so auch für die Getreidespätdüngung die richtige Einstellung des Schleuderstreuers überprüfen zu können.

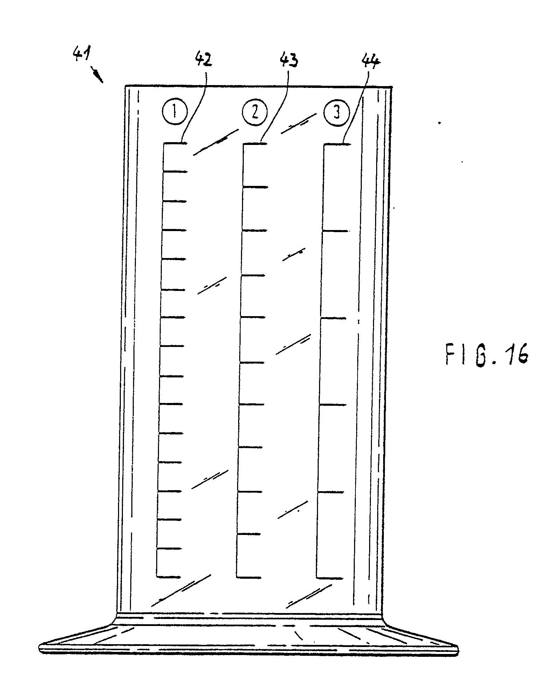

Der Volumenbecher gemäß Fig. 16 ist als Standzylinder 41 ausgebildet. Dieser Standzylinder weist mehrere Skalen 42,43 und 44 auf. Jede Skala ist mit einer Kennziffer versehen. So ist die Skala 42 mit der Kennziffer 1, die Skala 43 mit der Kennziffer 2 und die Skala 44 mit der Kennziffer 3 gekennzeichnet. Diese einzelnen Skalen repräsentieren Düngersorten unterschiedlichen Schüttgewichts.

## Ansprüche

1. Meßverfahren zur Überprüfung der Arbeitsbreite und der Streudichte bei Schleuderstreuern mittels Meßvorrichtungen (22,24,25,26,27,28,29), die in dem Bereich, über den die Düngemittelpartikel abgeschleudert werden, sich befinden, wobei die Meßvorrichtungen (22,24,25,26,27,28,29) stationär auf dem Boden in einem Abstand (a) von der Arbeitsbreitenmitte (2) angeordnet sind, und wobei zumindest an einer Stelle des Streubreiches (B) die Meßvorrichtungen (22,24,25,26,27,28,29) angeordnet sind, dadurch gekennzeichnet, daß der Meßwert dieser Meßvorrichtung (22,24,25,26,27,28,29) mit einem für diesen Abstand (a) ermittelten repräsentativen Wert für die gewünschte Arbeitsbreite (A) und die Streudichte verglichen wird, daß dieser repräsentative Wert auf einem Streuprüfstand in Zusammenhang mit der Erstellung eines gleichmäßigen Streubildes ermittelt und zusätzlich zu den Mengenwerten in eine Streutabelle eingetragen wird, daß zur Ermittlung dieser repräsentativen Werte auf dem Streuprüfstand zumindest ein zusätzlicher Auffangbehälter (19,20,21) zumindest ähnlich der Meßvorrichtungen um das Maß höher gegenüber dem Streuprüfstand angeordnet ist, welches der Höhe der Meßvorrichtungen (22,24,25,26,27,28,29) entspricht.

2. Meßverfahren nach Anspruch 1, dadurch gekennzeichnet, daß die Meßvorrichtungen (22,24) an dem Schnittpunkt (8) der Überlappung nebeneinander liegender Streubereiche bzw. am Ende der Arbeitsbreite (A) angeordnet sind.

3. Meßverfahren nach Anspruch 1, dadurch gekennzeichnet, daß in Fahrtrichtung des Schleuderstreuers (1) gesehen mehrere Meßvorrichtungen (22,24,25,26,27,28,29) hintereinander liegend vorgesehen sind.

4. Meßverfahren nach Anspruch 1, dadurch gekennzeichnet, daß eine in Fahrtrichtung gesehen langgestreckte und quer zur Fahrtrichtung schmalere Meßvorrichtung vorgesehen ist.

5. Meßverfahren nach Anspruch 1, dadurch gekennzeichnet, daß eine der Meßvorrichtungen (45) in der Mitte (53) des Streubereiches einer Streubahn (48) und die andere Meßvorrichtung (46) vorzugsweise im Schnittpunkt (52) der Überlappung der nebeneinanderliegenden Streubereiche der Streubahnen (48,50) aufgestellt sind.

## Claims

1. Measuring method for checking the working width and the distribution density of centrifugal distributors by means of measuring devices (22, 24, 25, 26, 27, 28, 29), which are situated in the region over which the fertilizer particles are centrifuged, wherein the measuring devices (22, 24, 25, 26, 27, 28, 29) are disposed in a stationary manner on the base at a spacing (a) from the centre (2) of the working width, and wherein the measuring devices (22, 24, 25, 26, 27, 28, 29) are disposed at least at one location of the distribution region (B), characterised in that the measured value of this measuring device (22, 24, 25, 26, 27, 28, 29) is compared with a representative value, determined for this spacing (a), for the desired working width (A) and the distribution density, in that this representative value is determined on a distribution test bed in conjunction with the production of a uniform distribution pattern and is entered in a distribution stable in addition to the amounts, in that, to determine these representative values on the distribution test bed, at least one additional collecting vessel (19, 20, 21), at least similarly to the measuring devices, is disposed higher than the distribution test bed by a dimension which corresponds to the height of the measuring devices (22, 24, 25, 26, 27, 28, 29).

2. Measuring method according to claim 1, characterised in that the measuring devices (22, 24) are disposed at the point of intersection (8) of the overlapping of adjacent distribution regions, or respectively at the end of the working width (A).

3. Measuring method according to claim 1, characterised in that, when viewed with respect to the direction of travel of the centrifugal distributor (1), a plurality of measuring devices (22, 24, 25, 26, 27, 28, 29) are provided one behind the other.

4. Measuring method according to claim 1, characterised in that a measuring device is provided which, when viewed with respect to the direction of travel, is elongate and narrower transversely relative to the direction of travel.

5. Measuring method according to claim 1, characterised in that one of the measuring devices (45) is disposed in the centre (53) of the distribution region of a distribution path (48), and the other measuring device (46) is preferably disposed at the point of intersection (52) of the overlapping of the adjacent distribution regions of the distribution paths (48, 50).

## Revendications

1. Procédé de mesure pour contrôler la largeur de travail et la densité d'épandage d'épandeurs centrifuges à l'aide de dispositifs de mesure (22, 24, 25, 26, 27, 28, 29) qui sont placés dans la zone où sont projetées les particules d'engrais, les dispositifs de mesure (22, 24, 25, 26, 27, 28, 29) sont fixes au sol à une distance (a) du milieu de la largeur de travail (2) et au moins à un endroit de la plage d'épandage (B) se trouvent les dispositifs de mesure (22, 24, 25, 26, 27, 28, 29), procédé caractérisé en ce que la grandeur de mesure de ce dispositif de mesure (22, 24, 25, 26, 27, 28, 29) est comparé à une grandeur représentative déterminée pour cette distance (a) pour la largeur de travail (A) souhaitée et la densité d'épandage, cette grandeur représentative étant déterminée dans un poste d'essai d'épandage en liaison avec l'établissement d'une image d'épandage régulière et en plus des grandeurs de quantité, cette grandeur est inscrite dans un tableau d'épandage et pour déterminer ces grandeurs représentative dans un poste d'essai d'épandage, on prévoit au moins un réceptacle supplémentaire (19, 20, 21), au moins analogue au dispositif de mesure et qui est relevé d'une hauteur par rapport au poste d'essai d'épandage correspondant à la hauteur des dispositifs de mesure (22, 24, 25, 26, 27, 28, 29).

2. Procédé de mesure selon la revendication 1, caractérisé en ce que les dispositifs de mesure (22, 24) sont prévus au point d'intersection (8) du chevauchement entre des plages d'épandage voisines ou à l'extrémité de la largeur d'épandage (A).

3. Procédé de mesure selon la revendication 1, caractérisé en ce que vu dans la direction de déplacement de l'épandeur centrifuge (1), plusieurs dispositifs de mesure (22, 24, 25, 26, 27, 28, 29) sont couchés les uns derrière les autres.

4. Procédé de mesure selon la revendication 1, caractérisé par un dispositif de mesure allongé dans la direction de déplacement et étroit transversalement au déplacement.

5. Procédé de mesure selon la revendication 1, caractérisé en ce que l'un des dispositifs de mesure (45) est prévu au milieu (53) de la plage d'épandage d'une bande d'épandage (48) et l'autre dispositif de mesure (46) est placé de préférence au point d'intersection (52) du chevauchement des plages d'épandage juxtaposées des bandes d'épandage (48, 50).

FIG.1

FIG.2

EP 0 240 655 B1

FIG. 3

FIG. 4

B

D

FIG.5

FIG.6

15

FIG.7

FIG.8

FIG.9

FIG.10

FIG.11

FIG.12

FIG. 14

FIG. 13

FIG. 15

FIG. 16